# FASCICULE DE BREVET EUROPEEN

(11) **EP 0 737 128 B1**
(45) Date de publication et mention de la délivrance du brevet: **22.07.1998**
(21) Numéro de dépôt: 95905175.6
(22) Date de dépôt: 27.12.1994
(51) Int. Cl.: B29C 49/16, B29C 49/48, B29K 67/00

(54) **PROCEDE ET INSTALLATION POUR LA FABRICATION DE RECIPIENTS, NOTAMMENT DE BOUTEILLES, EN MATERIAU THERMOPLASTIQUE**
VERFAHREN UND VORRICHTUNG ZUR HERSTELLUNG VON BEHÄLTERN, INSBESONDERE FLASCHEN, AUS KUNSTSTOFF
PROCESS AND EQUIPMENT FOR MAKING THERMOPLASTIC CONTAINERS, SUCH AS BOTTLES

(30) Priorité: 30.12.1993 FR 9315920
(43) Date de publication de la demande: 16.10.1996
(73) Titulaire: SIDEL, F-76600 Le Havre (FR)
(72) Inventeur: OUTREMAN, Jean Tristan, 76930 Octeville-sur-Mer (FR); FEUILLOLEY, Guy, 76610 Le Havre (FR)
(74) Mandataire: Gorrée, Jean-Michel
(86) Numéro de dépôt international: FR9401539
(87) Numéro de publication internationale: WO9518005

(56) Documents cités:
- EP-A- 0 308 685
- EP-A- 0 442 836
- EP-A- 0 559 103
- WO-A-94/01269

## Description

La présente invention concerne des perfectionnements apportés aux procédés et aux installations permettant de fabriquer, à partir d'une préforme en matériau thermoplastique, un récipient, tel qu'une bouteille, apte à subir ultérieurement, sans déformations notables, des conditions thermiques relativement sévères rencontrées au cours de processus tels que leur remplissage avec un liquide chaud ou la pasteurisation de leur contenu, procédé selon lequel on moule par soufflage ou étirage-soufflage, à partir d'une préforme en matériau thermoplastique dont le corps est chauffé à une température au moins égale à la température de ramollissement du matériau thermoplastique, un récipient intermédiaire possédant des dimensions supérieures à celles du récipient définitif à obtenir, ce récipient intermédiaire étant ensuite traité thermiquement pour obtenir une ébauche à corps rétréci chaud, laquelle est moulée pour former le récipient définitif.

De tels procédé et installation sont connus par le document FR-A-2 658 119 (EP-A-0442 836).

Bien que ce procédé connu donne toute satisfaction eu égard aux avantages procurés par rapport aux procédés qui lui étaient antérieurs, il s'est toutefois avéré que les récipients obtenus par sa mise en oeuvre présentaient un fond sujet à une déformation lors du remplissage à chaud, cette déformation consistant en un affaissement du fond vers l'extérieur, notamment dans la zone du raccordement entre la paroi latérale du corps et le fond. Cet affaissement ne se produit pas de façon régulière sur le pourtour du récipient, avec une variation incontrôlée de la forme du fond, et provoque donc une instabilité du récipient ; il entraîne également une fragilisation du fond du récipient dans la zone où il se manifeste ; enfin, il provoque une modification du volume du récipient.

Il s'est avéré que l'affaissement du fond résulte d'un étirage local trop important de la paroi du récipient dans la zone précitée et de la libération, en raison de l'échauffement entraîné par le remplissage avec un liquide chaud, des contraintes induites lors du soufflage final de l'ébauche rétrécie chaude.

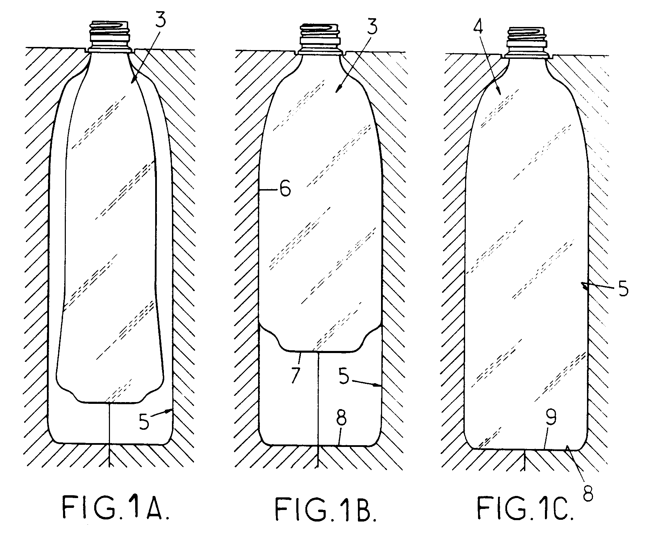

En effet, pour des raisons évidentes de faisabilité, l'ébauche rétrécie chaude a des dimensions transversales et longitudinales inférieures à celles de la cavité 5 du moule de soufflage final (voir fig. 1A des dessins ci-annexés) : on est ainsi assuré que l'ébauche ne sera pas pincée lors de la fermeture du moule. Il a été mis en évidence que, lors du soufflage final de cette ébauche sous haute pression (par exemple 3 à 4 x 10⁶ Pa), la partie supérieure 6 du corps de l'ébauche 3 était plaquée en premier lieu contre les parois de la cavité du moule pour former l'épaule du récipient final ; puis le plaquage contre les parois de la cavité du moule se développait de façon continue depuis l'épaule en direction du fond, le fond du récipient étant formé en dernier lieu. Or, au cours de ce processus de moulage à déroulement progressif, la formation de l'épaule, puis du corps du récipient se traduit par une augmentation de leurs diamètres respectifs, ce qui, compte tenu de l'absence d'étirage du matériau thermoplastique d'une région vers une autre, s'accompagne d'une diminution progressive de la longueur de l'ébauche. Il en résulte qu'au moment de sa formation, le fond non encore formé 7 de l'ébauche se trouve notablement éloigné du fond 8 de la cavité de moulage 5 (voir fig. 1B) et que la mise en forme définitive du fond de l'ébauche s'accompagne d'un étirage biaxial (longitudinal et transversal) notable du matériau qui est induit par l'étirement de celui-ci : le récipient finalement obtenu 4 (voir fig. 1C) présente donc, dans sa zone de fond 9 maintenant formée, un étirage local sensiblement plus important, d'où une épaisseur affaiblie, et des contraintes induites, supérieures par rapport au reste du récipient, qui seront ultérieurement libérées lors d'un échauffement tel que celui provoqué par un remplissage à chaud.

Le document EP-A-0559 103 propose une solution pour remédier à cet inconvénient et obtenir un récipient à fond mécaniquement résistant. Toutefois, ce procédé connu est destiné à la fabrication de récipients dont la partie centrale du fond est repoussée vers l'intérieur en déformant par matriçage ("boxage"), à l'aide d'un fond de moule mobile, le fond de l'ébauche rétrécie chaude qui possède une longueur inférieure à celle du récipient final à obtenir, mais supérieure à la distance comprise entre l'orifice du goulot et le sommet du fond convexe du récipient final. En outre, le déroulement de ce processus de "boxage" du fond de l'ébauche rétrécie, puis de soufflage pour la formation du récipient final nécessite la présence d'une tige, intérieure à l'ébauche, pour centrer et bloquer celle-ci.

Il en résulte que le procédé connu décrit dans ce document n'est pas simple à mettre en oeuvre sur le plan mécanique et qu'il est restreint à la fabrication de seuls récipients à fond rentré, qui ne correspondent pas toujours à la demande des utilisateurs.

L'invention a donc essentiellement pour objet de proposer un procédé et une installation perfectionnés qui permettent d'obtenir des récipients dont le fond présente une bonne résistance à la température et dont le matériau ne présente plus notablement de contraintes induites, de façon à pouvoir supporter ultérieurement, sans déformation sensible, des échauffements importants tels que ceux entraînés par un remplissage à chaud, ces procédé et installation devant être de mise en oeuvre aussi simple que possible sur la base du procédé et de l'installation décrits dans le document FR-A-2 658 119 (EP-A-0 442 836).

A ces fins, selon un premier de ses aspects, l'invention propose un procédé tel qu'indiqué au préambule qui, étant agencé conformément à l'invention, se caractérise essentiellement en ce que :
a/ on produit, à partir du récipient intermédiaire, une ébauche à corps rétréci chaud dont le corps possède une longueur prédéterminée supérieure à celle du corps du récipient définitif à obtenir,
b/ puis, à partir de l'ébauche à corps rétréci chaud, on effectue par soufflage un moulage préliminaire du corps, à l'exception de la zone de fond du récipient définitif à obtenir, la longueur du récipient à zone de fond non moulée ainsi obtenu étant sensiblement égale à celle du récipient définitif à obtenir,
c/ enfin, on effectue par soufflage un moulage final du récipient à zone de fond non moulée au cours duquel le corps et la zone de fond sont mis à leurs formes et dimensions définitives, pour obtenir le récipient définitif.

Au cours du moulage préliminaire de l'ébauche rétrécie chaude, qui est avantageusement effectué par un soufflage sous basse pression (par exemple entre 10⁵ et 1,5 x 10⁶ Pa), l'ébauche diminue de hauteur en raison du gonflement de l'épaule et du corps qui viennent en contact avec les parois latérales de la cavité de moulage. Mais la basse pression de soufflage est insuffisante pour étirer et allonger le matériau constituant la zone de fond de cette ébauche. On peut considérer que ce moulage préliminaire, notamment par soufflage sous basse pression, modifie la forme de l'ébauche sans en modifier la surface. Dans ces conditions, la zone de fond de l'ébauche, qui n'a pas été étirée, n'a pas subi de diminution d'épaisseur et son matériau n'est le siège d'aucune contrainte induite.

Du fait que le récipient à fond non formé ainsi obtenu possède une longueur sensiblement égale à celle du récipient définitif à obtenir, le fond non formé dudit récipient est au contact ou pratiquement au contact du fond de la cavité de moulage dans laquelle on procède au moulage final qui est avantageusement effectué par un soufflage sous haute pression (par exemple 10⁶ à 4 x 10⁶ Pa). Il en résulte que le fond du récipient est étiré transversalement uniquement et que son étirage longitudinal est nul ou quasi nul. Comme par ailleurs le diamètre du fond de l'ébauche rétrécie chaude, puis du récipient à fond non formé est peu inférieur au diamètre du fond de la cavité de moulage, l'épaisseur de la zone de fond n'est pas notablement réduite tandis qu'aucune contrainte notable n'a été introduite en particulier dans la zone de fond. On obtient ainsi un récipient final qui est apte à supporter sans déformation un échauffement ultérieur, tel qu'un remplissage à chaud.

En outre, le déroulement de ce procédé ne s'écarte pas de façon importante du procédé décrit dans les documents FR-A-2 658 119 (EP-A-0 442 836), de sorte que sa mise en oeuvre dans les conditions qui seront indiqués ci-après n'implique qu'un aménagement ponctuel de l'installation de moulage et de ses conditions de fonctionnement.

Dans une mise en oeuvre avantageuse préférée du procédé de l'invention, on prévoit que les moulages préliminaire et final sont effectués dans un même moule pourvu d'un fond mobile qui est apte à occuper deux positions, savoir
- une position basse, en vue du moulage préliminaire, pour laquelle la longueur de la cavité de moulage est supérieure à celle du corps du récipient définitif et la cavité de moulage peut recevoir la susdite ébauche à corps rétréci chaud
- et une position haute, en vue du moulage final, pour laquelle la longueur de la cavité de moulage est celle du corps du récipient définitif,
et on déplace le fond du moule de sa position basse à sa position haute pendant ou après la formation du récipient à zone de fond non formée de façon telle qu'il n'exerce sensiblement pas de poussée contre le fond du récipient à zone de fond non formée.

On soulignera ici que le fond mobile du moule, lors de sa remontée, ne repousse pas le fond du récipient à fond non formé, et n'exerce donc pas une action de "boxage" sur ce fond contrairement à ce qui était divulgué dans le document EP-A-0 559 103. La mobilité conférée au fond du moule sert donc uniquement à adapter de façon très étroite le volume de la cavité de moulage au volume effectif de l'objet à mouler au cours du déroulement du processus.

Selon un second de ses aspects, l'invention propose une installation pour la mise en oeuvre du procédé ci-dessus, installation qui, étant agencée conformément à l'invention, se caractérise essentiellement :
- en ce que lesdits moyens pour fabriquer une ébauche de récipient à corps rétréci chaud sont agencés pour produire une ébauche dont le corps rétréci est plus long que le corps du récipient final à obtenir,
- en ce que les moyens de moulage comprennent une matrice de moulage à fond mobile déplaçable entre deux positions, savoir une position basse, en vue du moulage préliminaire, pour laquelle la matrice définit une cavité de moulage de mêmes dimensions transversales, mais de dimension longitudinale plus grande que celle du corps du récipient final à obtenir, et une position haute, en vue du moulage final, pour laquelle la matrice définit une cavité de moulage de mêmes dimensions, transversale et longitudinale, que le corps du récipient final à obtenir,
- et en ce que cette installation comporte en outre :
   - des moyens de soufflage sous basse pression de l'ébauche à corps rétréci chaud disposée dans la cavité de moulage lorsque le fond de la matrice de moulage est dans la susdite position basse, pour former un récipient à corps moulé, à l'exception de sa zone de fond, avec une longueur égale sensiblement à celle du récipient définitif à obtenir,
   - des moyens de soufflage sous haute pression du récipient à fond non formé disposé dans la cavité de moulage lorsque le fond de la matrice de moulage est dans la susdite position haute, pour former le récipient définitif à obtenir, et
   - des moyens de commande de déplacement du fond mobile de la matrice depuis sa position basse jusqu'à sa position haute pendant ou après la formation du corps, à l'exception de la zone de fond, du récipient à fond non formé sans que le fond mobile du moule exerce une poussée sensible contre le fond dudit récipient à fond non formé.

De préférence, les moyens de soufflage sous basse pression sont agencés pour effectuer un soufflage sous une pression comprise approximativement entre 10⁵ et 1,5 x 10⁶ Pa et les moyens de soufflage sous haute pression sont agencés pour effectuer un soufflage sous une pression comprise approximativement entre 10⁶ et 4 x 10⁶ Pa.

Dans un mode de réalisation préféré, le fond mobile du moule est solidaire du piston d'un vérin pneumatique soumis à la haute pression de soufflage pour son déplacement de sa susdite position basse à sa susdite position haute.

Avantageusement, le fond mobile est traversé par un conduit débouchant dans la cavité de moulage par au moins un orifice approximativement central et relié à la basse pression, afin de faciliter le démoulage du fond du récipient final.

L'invention sera mieux comprise à la lecture de la description détaillée qui suit dans laquelle on se réfère au reste des dessins annexés sur lesquels :
- les figures 2A à 2D sont des vues très schématiques d'un moule d'une installation agencée conformément à l'invention et montrent les principales étapes respectives successives de formation d'un récipient à partir d'une ébauche rétrécie chaude, et
- la figure 3 montre de façon schématique les formes des récipients correspondant aux étapes principales du procédé mis en oeuvre

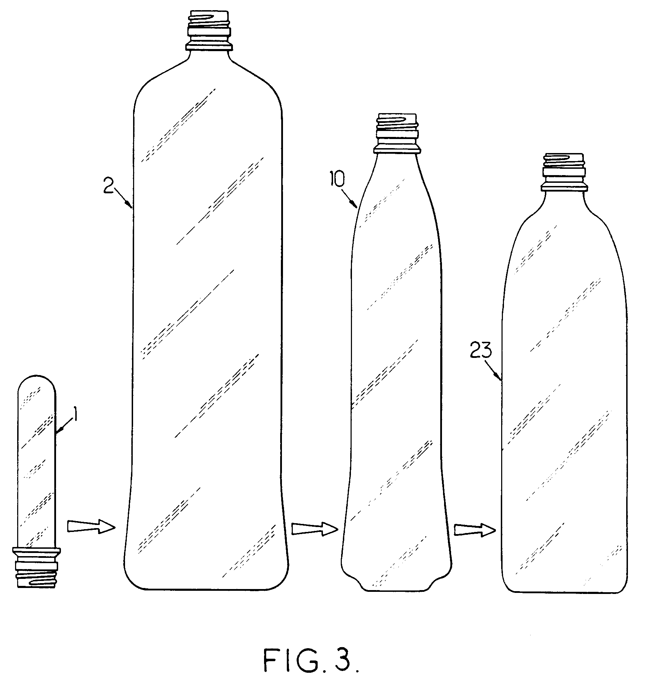

En se référant tout d'abord à la figure 3, la préforme initiale 1 est moulée de façon connue, par soufflage ou étirage-soufflage dans un moule, dont la température des parois latérales est comprise entre environ 5 et 90°C et celle du fond est comprise entre environ 5 et 40°C pour une préforme en polyéthylènetérephtalate (PET), pour produire un récipient intermédiaire surdimensionné longitudinalement et diamétralement. Puis le récipient surdimensionné 2 est chauffé pour libérer les contraintes induites par l'étirage-soufflage, ce qui conduit à une ébauche chaude 10 à corps rétréci aussi bien longitudinalement que transversalement. Les étapes précédentes sont conduites dans les conditions générales indiquées à cet effet dans le document FR-A-02 658 119 (EP-A-0 442 836), à ceci près que les conditions opératoires doivent être adaptées pour que ladite ébauche rétrécie 10 possède une longueur supérieure à celle du récipient final à obtenir. Différentes solutions relevant toutes des connaissances traditionnelles de l'Homme de l'Art peuvent être employées et/ou combinées pour parvenir au résultat recherché et l'Homme de l'Art est donc à même de déterminer les opérations mécaniques et/ou thermiques appropriées en fonction du matériau utilisé et des dimensions du récipient final.

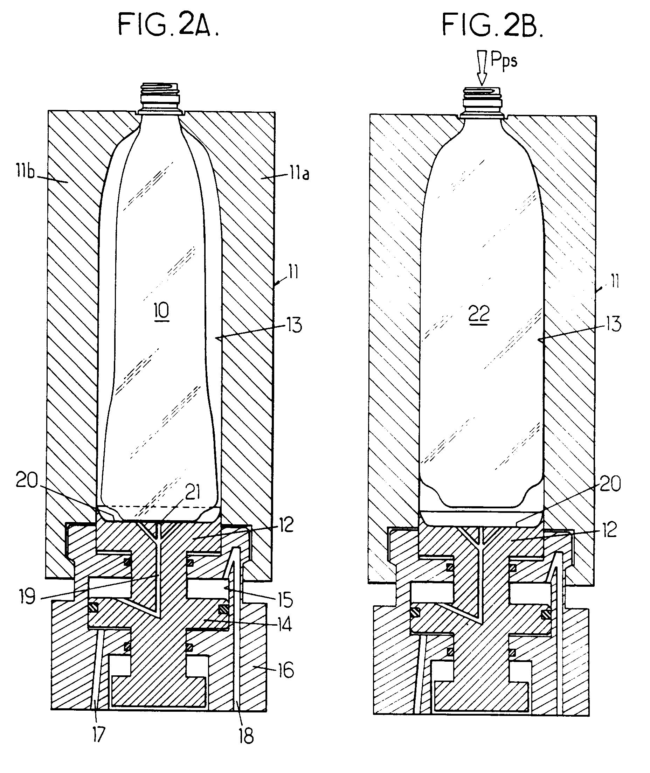

L'ébauche rétrécie chaude 10 est ensuite chauffée à une température comprise entre 150 et 240°C, puis traitée par soufflage dans un moule 11 dont la température de paroi est comprise entre 110 et 160°C. Comme montré aux figures 2A à 2D, le moule de soufflage est du type en trois parties, avec un demi-moule droit 11a, un demi-moule gauche 11b et un fond mobile 12 ; les deux demi-moules 11a et 11b définissent ensemble une cavité 13 ayant la forme du corps du récipient final à obtenir.

Le fond mobile 12 est solidaire d'un piston 14 associé de façon mobile et étanche à une chambre 15 définie dans une embase 16 du moule. Cette embase est mobile elle-même, selon l'axe longitudinal de la cavité de moulage, entre une position haute et une position basse. En position haute cette embase est enserrée entre les parties inférieures des demi-moules 11a et 11b et complète la cavité du moulage. La position basse permet le démoulage du récipient moulé. Le vérin ainsi constitué est de préférence de type pneumatique, de façon à pouvoir être actionné directement avec le fluide sous pression (air comprimé) utilisé pour le soufflage du récipient dans des conditions qui seront exposées plus loin. Le vérin pneumatique est en outre du type à double effet et deux conduits 17 et 18 traversent l'embase 16 pour déboucher dans la chambre 15 de part et d'autre du piston 14. Enfin, pour faciliter le démoulage du récipient final achevé, le fond mobile 12 est traversé par un conduit 19, notamment axial, qui débouche dans la surface de moulage 20 du fond par au moins un orifice sensiblement central 21, et de préférence par plusieurs orifices comme montré aux figures 2A à 2D. Le conduit 19 achemine un fluide sous pression pour le démoulage, fluide qui peut, ici encore, être constitué par le fluide sous pression (air comprimé) commandant le déplacement du vérin pour le faire redescendre vers une position basse : à cet effet, le conduit 19 est en liaison avec la chambre 15 du côté de la face supérieure (sur les dessins) du piston 14, là où débouche également le conduit 18.

Le fonctionnement de l'installation est le suivant.

L'ébauche rétrécie chaude (150-240°C) 10 est mise en place dans le moule 11 alors que le fond mobile 12 est en position basse (sur le dessin) et dégage une cavité de moulage de longueur maximale ; la surface 20 du fond mobile 12 affleure le fond de l'ébauche 10 sans toutefois forcer sur celui-ci (Fig. 2A).

On effectue alors un moulage préliminaire (Fig. 2B) par soufflage dans l'ébauche 10 d'un fluide de soufflage (air comprimé) sous une pression relativement faible -par exemple 10⁵ à 10⁶ Pa-, pendant un court laps de temps -par exemple 0,2 à 0,6 s-, comme schématisé par la flèche Pps sur la figure 2B.

Au cours de cette étape, l'ébauche subit une diminution de hauteur par suite du gonflement de l'épaule et du corps qui viennent en contact avec les parois latérales de la cavité 13 de moulage. Toutefois, à ce stade, la pression de soufflage est insuffisante pour étirer et allonger le matériau de l'ébauche, notamment dans la zone de fond de celle-ci. Ce premier soufflage ou présoufflage modifie la forme de l'ébauche tout en lui gardant sa surface initiale et il y a donc conservation de l'épaisseur de la paroi en toute zone de l'ébauche.

On notera qu'à ce stade l'ébauche ou récipient à fond non formé 22 (voir fig. 2B) s'est rétracté longitudinalement de façon à présenter sensiblement la longueur du récipient final à obtenir et que son fond est maintenant situé, dans la cavité de moulage, très sensiblement au niveau qui sera celui du fond du récipient final.

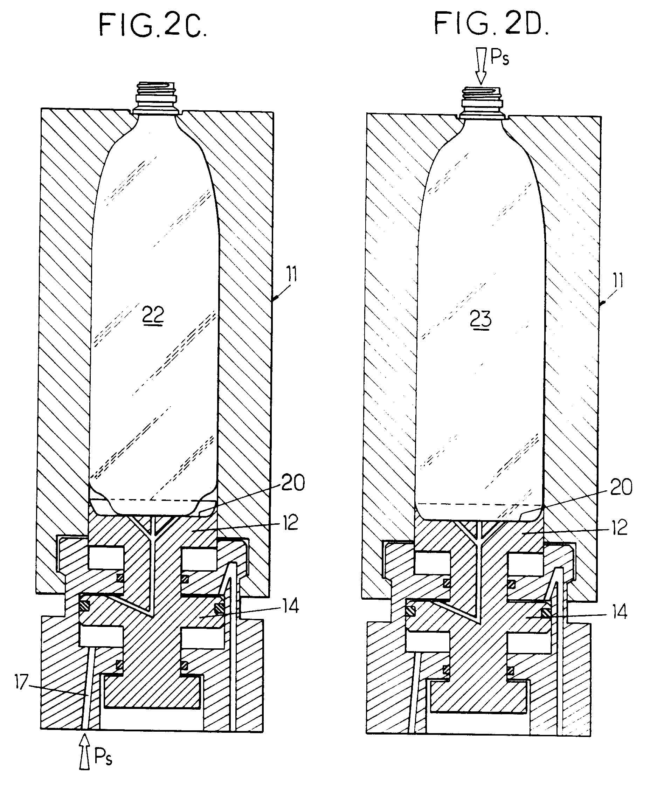

On fait alors remonter le fond mobile 12 du moule pour l'amener en position haute, comme montré à la figure 2C, en appliquant sur le piston 14, par l'intermédiaire du conduit 17, un fluide sous pression comme schématisé par la flèche Ps sur la figure 2C. En pratique, on utilise l'air comprimé sous haute pression qui sera employé pour effectuer le soufflage final du récipient dont question ci-après. Dans sa position haute, le fond mobile 12 est situé tout contre le fond du récipient à fond non formé 22, ou à son voisinage immédiat, sans toutefois repousser le fond du récipient et sans exercer un quelconque effort sur ce fond. A ce stade, la cavité de moulage présente la forme et les dimensions, notamment la longueur, du récipient final à obtenir. Ainsi, le fond 14 du moule est déplacé de sa position basse à sa position haute pour rattraper la diminution de longueur du récipient.

On notera ici que le déplacement du fond mobile 14 peut s'effectuer en même temps que se déroule le présoufflage et que l'ébauche 22 se réduit longitudinalement, de sorte que le fond mobile 14 suit à proprement parler le relèvement du fond de l'ébauche sans forcer sur celui-ci, ce qui permet de réduire la durée du cycle.

On effectue enfin le soufflage final (flèche Ps) sous haute pression -par exemple 10⁶ à 4 x 10⁶ Pa- du récipient à fond non formé 22, pour obtenir le récipient final souhaité 23 (voir fig. 2D). Compte tenu de la conformation du récipient à fond non formé 22 dans la cavité de moulage avec le fond 12 du moule en position haute (fig. 2C), le fond du récipient subit un étirage diamétral uniquement, l'étirage axial étant inexistant. Comme en outre, le diamètre du fond du récipient à fond non formé 22 est peu inférieur au diamètre du fond de la cavité de moulage, l'étirage diamétral reste de faible amplitude : il en résulte que l'épaisseur du matériau, dans la zone de fond, est peu modifiée et que les contraintes qui y sont induites restent faibles. Le récipient final 23 est donc apte à subir, ultérieurement, des températures élevées (par exemple en raison d'un remplissage à chaud), sans présenter de déformations sensibles.

Après que le soufflage final a été effectué, de l'air sous faible pression, 5 à 6 x 10⁵ Pa, est insufflé par le conduit 18 tandis que le fond mobile 12 est maintenu en position haute par l'air sous haute pression insufflé dans le conduit 17. L'air sous faible pression gagne par le conduit 19 le ou les orifices 21 de la surface 20 du fond mobile 12, ce qui a pour effet de séparer (décoller) le fond du récipient moulé du fond mobile.

Puis, l'alimentation en air sous haute pression dans le conduit 17 est coupée, tandis que l'alimentation en air sous faible pression est maintenue dans le conduit 18, ce qui a pour effet de ramener le fond mobile 12 en position basse.

Enfin, les deux demi-moules 11a et 11b sont séparés, l'embase mobile 16 descendue en position basse et le récipient 23 démoulé.

Comme il va de soi et comme il résulte déjà de ce qui précède, l'invention ne se limite nullement à ceux de ses modes d'application et de réalisation qui ont été plus particulièrement envisagés ; elle en embrasse, au contraire, toutes les variantes.

## Revendications

1. Procédé pour fabriquer, à partir d'une préforme en matériau thermoplastique, un récipient (23), tel qu'une bouteille, apte à subir ultérieurement, sans déformations notables, des conditions thermiques relativement sévères rencontrées au cours de processus tels que leur remplissage avec un liquide chaud ou la pasteurisation de leur contenu, procédé selon lequel on moule, par soufflage ou étirage-soufflage, à partir d'une préforme (1) en matériau thermoplastique dont le corps est chauffé à une température au moins égale à la température de ramollissement du matériau thermoplastique, un récipient intermédiaire (2) possédant des dimensions supérieures à celles du récipient définitif à obtenir, ce récipient intermédiaire étant ensuite traité thermiquement pour obtenir une ébauche à corps rétréci chaud, laquelle est moulée pour former le récipient définitif (23),
caractérisé en ce que :
a/ on produit, à partir du récipient intermédiaire (2), une ébauche à corps rétréci chaud (10) dont le corps possède une longueur prédéterminée supérieure à celle du corps du récipient définitif (23) à obtenir,
b/ puis, à partir de l'ébauche à corps rétréci chaud (10), on effectue par soufflage un moulage préliminaire du corps à l'exception de la zone de fond du récipient définitif à obtenir, la longueur du récipient (22) à zone de fond non moulée ainsi obtenu étant sensiblement égale à celle du récipient définitif à obtenir,
c/ enfin, on effectue par soufflage un moulage final du récipient (22) à zone de fond non moulée au cours duquel le corps et la zone de fond sont mis à leurs formes et dimensions définitives, pour obtenir le récipient définitif (23).

2. Procédé selon la revendication 1, caractérisé en ce que le moulage préliminaire conduisant au récipient (22) à corps moulé à l'exception de sa zone de fond est effectué par un soufflage sous basse pression de l'ébauche à corps rétréci à chaud (10).

3. Procédé selon la revendication 1 ou 2, caractérisé en ce que le moulage final conduisant au récipient définitif (23) à corps entièrement formé est effectué par un soufflage sous haute pression du récipient (22) à zone de fond non moulée.

4. Procédé selon l'une quelconque des revendications 1 à 3, caractérisé en ce que les moulages préliminaire et final sont effectués dans un même moule (11) pourvu d'un fond mobile (12) qui est apte à occuper deux positions, savoir
- une position basse, en vue du moulage préliminaire, pour laquelle la longueur de la cavité de moulage (13) est supérieure à celle du corps du récipient définitif (23) et la cavité de moulage (13) peut recevoir la susdite ébauche à corps rétréci chaud (10)
- et une position haute, en vue du moulage final, pour laquelle la longueur de la cavité de moulage (13) est celle du corps du récipient définitif (23),
et en ce qu'on déplace le fond du moule (12) de sa position basse à sa position haute pendant ou après la formation du récipient (22) à zone de fond non moulée de façon telle qu'il n'exerce sensiblement pas de poussée contre le fond du récipient à zone de fond non moulée.

5. Procédé selon l'une quelconque des revendications 2 à 4, caractérisé en ce que le soufflage sous basse pression est effectué sous une pression comprise entre approximativement 10⁵ et 1,5 x 10⁶ Pa.

6. Procédé selon l'une quelconque des revendications 3 à 5, caractérisé en ce que le soufflage sous haute pression est effectué sous une pression comprise entre approximativement 10⁶ et 4 x 10⁶ Pa.

7. Installation pour la mise en oeuvre du procédé selon l'une quelconque des revendications 1 à 6, pour fabriquer, à partir d'une préforme (1) en matériau thermo-plastique, un récipient (23), tel qu'une bouteille, apte à subir ultérieurement, sans déformations notables, des conditions thermiques relativement sévères rencontrées au cours de processus tels que leur remplissage avec un liquide chaud ou la pasteurisation de leur contenu, cette installation comprenant des moyens pour fabriquer, à partir de la préforme (1) du récipient constituée en matériau thermoplastique, une ébauche (10) de récipient à corps rétréci chaud, et des moyens de moulage (11) pour former, à partir de l'ébauche à corps rétréci chaud (10), un récipient final (23) avec un corps ayant sa forme et ses dimensions définitives,
caractérisée :
- en ce que lesdits moyens pour fabriquer une ébauche de récipient à corps rétréci chaud (10) sont agencés pour produire une ébauche dont le corps rétréci est plus long que le corps du récipient final à obtenir,
- en ce que les moyens de moulage (11) comprennent une matrice de moulage à fond mobile (12) déplaçable entre deux positions, savoir une position basse, en vue du moulage préliminaire, pour laquelle la matrice définit une cavité de moulage (13) de mêmes dimensions transversales, mais de dimension longitudinale plus grande que celles du corps du récipient final à obtenir (23), et une position haute, en vue du moulage final, pour laquelle la matrice définit une cavité de moulage (13) de mêmes dimensions, transversales et longitudinale, que le corps du récipient final à obtenir (23),
- et en ce que cette installation comporte en outre :
- des moyens de soufflage sous basse pression (Pps) de l'ébauche à corps rétréci chaud (10) disposée dans la cavité de moulage (13) lorsque le fond (12) de la matrice de moulage est dans la susdite position basse, pour former un récipient (22) à corps moulé, à l'exception de sa zone de fond, avec une longueur égale sensiblement à celle du récipient définitif à obtenir,
- des moyens de soufflage sous haute pression (Ps) du récipient (22) à fond non formé disposé dans la cavité de moulage (13) lorsque le fond (12) de la matrice de moulage est dans la susdite position haute, pour former le récipient définitif à obtenir (23), et
- des moyens (14-18) de commande de déplacement du fond mobile de la matrice depuis sa position basse jusqu'à sa position haute pendant ou après la formation du corps, à l'exception de la zone de fond, du récipient à fond non formé sans que le fond mobile du moule exerce une poussée sensible contre le fond dudit récipient à fond non formé.

8. Installation selon la revendication 7, caractérisée en ce que les moyens de soufflage sous basse pression sont agencés pour effectuer un soufflage sous une pression comprise approximativement entre 10⁵ et 1,5 x 10⁶ Pa et en ce que les moyens de soufflage sous haute pression sont agencés pour effectuer un soufflage sous une pression comprise approximativement entre 10⁶ et 4 x 10⁶ Pa.

9. Installation selon la revendication 7 ou 8, caractérisée en ce que le fond mobile (12) du moule est solidaire du piston (14) d'un vérin pneumatique (14, 15) soumis à la haute pression de soufflage (Ps) pour son déplacement de sa susdite position basse à sa susdite position haute.

10. Installation selon l'une quelconque des revendications 7 à 9, caractérisée en ce que le fond mobile est traversé par un conduit (19) débouchant dans la cavité de moulage par au moins un orifice (21) approximativement central et relié à la basse pression (Pps), afin de faciliter le démoulage du fond du récipient final.

## Claims

1. A method of manufacturing a receptacle (23), such as a bottle, from a preform of thermoplastic material, the receptacle being suitable for being subjected subsequently, without significant deformation, to relatively severe temperature conditions encountered during processes such as being filled with a hot liquid or having its contents pasteurized, in which method, a preform (1) of thermoplastic material having its body heated to a temperature not less than the softening temperature of the thermoplastic material is molded by blowing or by stretch-blowing to form an intermediate receptacle (2) of dimensions greater than those of the final receptacle that is to be obtained, said intermediate receptacle subsequently being heat treated to obtain a blank having a hot-shrunk body, which blank is molded to form the final receptacle (23),
the method being characterized in that:
a/ the intermediate receptacle (2) is used to produce a blank having a hot-shrunk body (10) of predetermined length greater than the length of the body of the final receptacle (23) to be obtained;
b/ then the blank having a hot-shrunk body (10) is subjected to preliminary blow-molding to form the body of the final receptacle to be obtained, with the exception of its bottom zone, the length of the receptacle (22) having an un-molded bottom zone as obtained in this way being substantially equal to the length of the final receptacle to be obtained; and
c/ final blow-molding of the receptacle (22) having an unmolded bottom zone is performed, during which the body and the bottom zone are given their final shapes and dimensions, thereby obtaining the final receptacle (23).

2. A method according to claim 1, characterized in that the preliminary molding providing the receptacle (22) having a body that is molded with the exception of its bottom zone is performed by low pressure blowing of the blank having a hot-shrunk body (10).

3. A method according to claim 1 or 2, characterized in that the final molding giving rise to the final receptacle (23) having a fully formed body is performed by high pressure blowing of the receptacle (22) having an unmolded bottom zone.

4. A method according to any one of claims 1 to 3, characterized in that the preliminary and final molding operations are performed in the same mold (11) which is provided with a moving bottom (12) that is suitable for taking up two positions, namely:
• a low position for preliminary molding in which the length of the mold cavity (13) is greater than the length of the body of the final receptacle (23) and the mold cavity (13) is capable of receiving the above-mentioned blank having a hot-shrunk body (10); and
• a high position for final molding, in which the length of the mold cavity (13) is the same as the length of the body of the final receptacle (23);
and in that the mold bottom (12) is moved from its low position to its high position during or after formation of the receptacle (22) having an unmolded bottom zone in such a manner that it exerts substantially no thrust against the bottom of the receptacle having a non-molded bottom zone.

5. A method according to any one of claims 2 to 4, characterized in that the low pressure blowing is performed at a pressure lying in the range 10⁵ Pa to 1.5 × 10⁶ Pa, approximately.

6. A method according to any one of claims 3 to 5, characterized in that the high pressure blowing is performed at a pressure lying in the range 10⁶ Pa to 4 × 10⁶ Pa, approximately.

7. An installation for implementing the method according to any one of claims 1 to 6, to manufacture a receptacle (23), such as a bottle, from a preform (1) of thermoplastic material, the receptacle being suitable for being subsequently subjected without significant deformation to relatively severe temperature conditions as encountered during a process as being filled with a hot liquid or having its contents pasteurized, the installation including means for manufacturing a receptacle blank (10) having a hot-shrunk body from the receptacle perform (1) made of thermoplastic material, and molding means (11) for forming, from the blank (10) having a hot-shrunk body, a final receptacle (23) having a body with its final shape and dimensions,
the installation being characterized:
• in that said means for manufacturing a receptacle blank having a hot-shrunk body (10) are organized for producing a blank whose shrunk body is longer than the body of the final receptacle to be obtained;
• in that the molding means (11) comprise a mold matrix having a moving bottom (12) displaceable between two positions, namely a low position for preliminary molding in which the matrix defines a mold cavity (13) having the same transverse dimensions as the body of the final receptacle (23) to be obtained, but having longer longitudinal dimensions, and a high position for final molding in which the matrix defines a mold cavity (13) having the same dimensions both transversely and longitudinally as the body of the final receptacle (23) to be obtained; and
in that said installation further includes:
• low pressure blowing means (Pps) for blowing the blank (10) having a hot-shrunk body disposed in the mold cavity (13) when the bottom (12) of the mold matrix is in said low position, to form a receptacle (22) having a body that is molded, with the exception of its bottom zone, and having a length that is substantially equal to the length of the final receptacle to be obtained;
• high pressure blowing means (Ps) for blowing the receptacle (22) having the non-formed body disposed in the mold cavity (13) while the bottom (12) of the mold matrix is in said high position, to form the final receptacle (23) that is to be obtained; and
• means (14-18) for controlling displacement of the moving bottom of the matrix from the low position to its high position during or after formation of the body, with the exception of the bottom zone, of the receptacle having an unformed bottom without the moving bottom of the mold exerting perceptible thrust against the bottom of said receptacle having an unformed bottom.

8. An installation according to claim 7, characterized in that the low pressure blowing means are organized to blow at a pressure lying in the range 10⁵ Pa to 1.5 × 10⁶ Pa, approximately, and in that the high pressure blowing means are organized to blow at a pressure lying in the range 10⁶ Pa to 4 × 10⁶, approximately.

9. An installation according to claim 7, characterized in that the moving bottom (12) of the mold is secured to the piston (14) of a pneumatic actuator (14, 15) subjected to the blowing high pressure (Ps) for displacement from its said low position to its said high position.

10. An installation according to any one of claims 7 to 9, characterized in that the moving bottom has a duct (19) passing therethrough and opening out into the mold cavity via at least one orifice (21) that is approximately central and that is connected to the low pressure (Pps) to facilitate unmolding of the bottom of the final receptacle.

## Patentansprüche

1. Verfahren, um aus einem Vorformling aus thermoplastischem Material einen Behälter (23), wie eine Flasche, herzustellen, der dazu geeignet ist, später ohne besondere Verformungen relativ harten thermischen Bedingungen unterzogen zu werden, die im Verlauf eines Prozesses, wie seiner Abfüllung mit einer heißen Flüssigkeit oder der Pasteurisation seines Inhalts, auftreten, ein Verfahren, gemäß welchem durch Blasformung oder Streck-Blasformung aus einer Vorform (1) aus thermoplastischem Material, deren Körper auf eine Temperatur erwärmt ist, welche wenigstens gleich der Erweichungstemperatur des thermoplastischen Materials ist, ein Zwischenbehälter (2) geformt wird, der größere Abmessungen als die des zu erhaltenden Endbehälters besitzt, wobei dieser Zwischenbehälter dann wärmebehandelt wird, um einen wärmegeschrumpften Rohkörper zu erhalten, welcher geformt wird, um den Endbehälter (23) zu bilden, dadurch gekennzeichnet, daß:
a) ausgehend von dem Zwischenbehälter (2) ein wärmegeschrumpfter Rohkörper (10) hergestellt wird, dessen Körper eine vorbestimmte Länge besitzt, die größer ist als die des zu erhaltenden Körpers des Endbehälters (23),
b) dann aus dem wärmegeschrumpften Rohkörper (10) durch Blasformung eine vorläufige Formung des Körpers mit Ausnahme des Bodenbereichs des zu erhaltenden Endbehälters bewirkt wird, wobei die Länge des so erhaltenen Behälters (22) mit nicht-geformtem Bodenbereich im wesentlichen gleich derjenigen des zu erhaltenden Endbehälters ist,
c) schließlich durch Blasformung eine endgültige Formung des Behälters (22) mit nicht-geformtem Bodenbereich bewirkt wird, im Verlauf derselben der Körper und der Bodenbereich ihre endgültigen Formen und Abmessungen erhalten, um den Endbehälter (23) zu erhalten.

2. Verfahren nach Anspruch 1, dadurch gekennzeichnet, daß die vorläufige Formung, die zu dem Behälter (22) mit einem mit Ausnahme seines Bodenbereichs geformten Körper führt, durch eine Blasformung des wärmegeschrumpften Rohkörpers (10) unter Niederdruck bewirkt wird.

3. Verfahren nach Anspruch 1 oder 2, dadurch gekennzeichnet, daß die endgültige Formgebung, die zu dem Endbehälter (23) mit vollständig geformtem Körper führt, durch eine Blasformung des Behälters (22) mit nicht-geformtem Bodenbereich unter Hochdruck bewirkt wird.

4. Verfahren nach einem der Ansprüche 1 bis 3, dadurch gekennzeichnet, daß die vorläufige und die endgültige Formung in einer gemeinsamen Form (11) ausgeführt werden, die mit einem beweglichen Boden (12) versehen ist, welcher zwei Positionen einnehmen kann, nämlich
- eine tiefe Position im Hinblick auf die vorläufige Formung, bei welcher die Länge des Formungsraumes (13) größer ist als die des Körpers des Endbehälters (23) und der Formungsraum (13) den oben genannten wärmegeschrumpften Rohkörper (10) aufnehmen kann,
- und eine hohe Position im Hinblick auf die endgültige Formung, bei welcher die Länge des Formungsraumes (13) die des Körpers des Endbehälters (23) ist,
und dadurch, daß der Boden der Form (12) während oder nach der Ausbildung des Behälters (22) mit nicht-geformtem Bodenbereich von seiner tiefen Position in seine hohe Position verstellt wird, derart, daß dieser im wesentlichen keinen Stoß gegen den Boden des Behälters mit nicht-geformten Bodenbereich ausübt.

5. Verfahren nach einem der Ansprüche 2 bis 4, dadurch gekennzeichnet, daß die Blasformung unter Niederdruck mit einem Druck zwischen etwa 10⁵ und 1,5 x 10⁶ Pa ausgeführt wird.

6. Verfahren nach einem der Ansprüche 3 bis 5, dadurch gekennzeichnet, daß die Blasformung unter Hochdruck mit einem Druck zwischen etwa 10⁶ und 4 x 10⁶ Pa ausgeführt wird.

7. Anlage zur Durchführung des Verfahrens nach einem der Ansprüche 1 bis 6, um ausgehend von einer Vorform (1) aus thermoplatischem Material einen Behälter (23), wie eine Flasche, herzustellen, der geeignet ist, später ohne besondere Verformungen relativ harten thermischen Bedingungen ausgesetzt zu werden, die im Verlauf des Prozesses, wie seiner Abfüllung mit einer heißen Flüssigkeit oder der Pasteurisation seines Inhalts, auftreten, wobei diese Anlage aufweist Mittel, um ausgehend von der Vorform (1) des aus thermoplastischem Material gebildeten Behälters einen Behälterrohling (10) mit wärmegeschrumpftem Körper herzustellen, und Formungsmittel (11), um ausgehend von dem wärmegeschrumpften Körperrohling (10) einen Endbehälter (23) mit einem seine endgültige Form und Abmessungen aufweisenden Körper herzustellen,
gekennzeichnet:
- dadurch, daß die Mittel zum Herstellen eines Behälterrohlings (10) mit wärmegeschrumpftem Körper so ausgebildet sind, daß sie einen Rohling erzeugen, dessen geschrumpfter Körper länger als der Körper des zu erhaltenden Endbehälters ist,
- dadurch, daß die Formungsmittel (11) eine Formungsmatrize mit beweglichem Boden (12) umfassen, der zwischen zwei Positionen verstellbar ist, nämlich einer tiefen Position im Hinblick auf die vorläufige Formung, bei welcher die Matrize einen Formungsraum (13) mit gleichen Querabmessungen aber einer größeren Längsabmessung als denjenigen der Körper der zu erhaltenden Endbehälter (23) begrenzt, und einer hohen Position im Hinblick auf die endgültige Formung, bei welcher die Matrize einen Formungsraum (13) mit gleichen Quer- und Längsabmessungen wie der Körper des zu erhaltenden Endbehälters (23) begrenzt,
- und dadurch, daß diese Anlage ferner umfaßt:
- Mittel zur Blasformung unter Niederdruck (Pps) des in dem Formungsraum (13) angeordneten wärmegeschrumpften Körperrohlings (10) während sich der Boden (12) der Formungsmatrize in der vorgenannten tiefen Position befindet, um einen Behälter (22) mit einem mit Ausnahme seines Bodenbereichs geformten Körper zu schaffen, mit einer Länge, die im wesentlichen gleich derjenigen des zu erhaltenden Endbehälters ist,
- Mittel zur Blasformung unter Hochdruck (Ps) des in dem Formungsraum (13) angeordneten Behälters (22) mit nicht-geformtem Boden während sich der Boden (12) der Formungsmatrize in der vorgenannten hohen Position befindet, um den zu erhaltenden Endbehälter (23) zu bilden, und
- Mitteln (14-18) zur Steuerung der Verstellung des beweglichen Bodens der Matrize von seiner tiefen Position bis in seine hohe Position während oder nach der mit Ausnahme des Bodenbereichs erfolgten Formung des Körpers des Behälters mit nicht-geformtem Boden, ohne daß der bewegliche Boden der Form einen wesentlichen Stoß gegen den Boden des Behälters mit nicht-geformtem Boden ausübt.

8. Anlage nach Anspruch 7, dadurch gekennzeichnet, daß die Mittel zur Blasformung unter Niederdruck so angeordnet sind, daß sie eine Blasformung mit einem Druck von etwa zwischen 10⁵ und 1,5 x 10⁶ Pa ausführen, und daß die Mittel zur Blasformung unter Hochdruck so ausgebildet sind, daß sie eine Blasformung unter einem Druck von etwa zwischen 10⁶ und 4 x 10⁶ Pa ausführen.

9. Anlage nach Anspruch 7 oder 8, dadurch gekennzeichnet, daß der bewegliche Boden (12) der Form einstückig mit dem Kolben (14) eines Pneumatikzylinders (14, 15) ist, der für seine Verstellung von seiner tiefen Position in seine hohe Position dem Hochdruck (Ps) der Blasformung ausgesetzt ist.

10. Anlage nach einem der Ansprüche 7 bis 9, dadurch gekennzeichnet, daß der bewegliche Boden von einer Leitung (19) durchdrungen ist, die mit wenigstens einer in etwa zentralen Öffnung (21) in den Formungsraum mündet und an Tiefdruck (Pps) angeschlossen ist, um so die Ablösung des Bodens des Endbehälters zu erleichtern.
